# EUROPÄISCHE PATENTSCHRIFT

(11) **EP 1 050 337 B1**
(45) Veröffentlichungstag und Bekanntmachung des Hinweises auf die Patenterteilung: **03.04.2002**
(21) Anmeldenummer: 00115874.0
(22) Anmeldetag: 28.01.1999
(51) Int. Cl.: B01J 2/00, B01J 2/12, B01F 15/00, B01F 7/08

(54) **Trommelcoater mit Zwangsrückführung des Gutes**
Drum coater with forced recirculation of the material
Machine à enduire à tambour avec recyclage forcé du materiau à enduire

(30) Priorität: 28.01.1998 DE 19803113
(43) Veröffentlichungstag der Anmeldung: 08.11.2000
(62) Teilanmeldung aus: 99910097.7
(73) Patentinhaber: L.B. Bohle Maschinen + Verfahren GmbH, 59320 Ennigerloh (DE)
(72) Erfinder: Bohle, Lorenz, 59320 Ennigerloh (DE)
(74) Vertreter: Habbel, Hans-Georg, Dipl.-Ing.

(56) Entgegenhaltungen:
- EP-A- 0 744 212
- FR-A- 1 459 246
- US-A- 3 439 836
- US-A- 3 538 067

## Beschreibung

Die Erfindung betrifft eine Vorrichtung nach dem Oberbegriff des Anspruches 1.

Eine derartige Vorrichtung ist aus der EP 238 028 A2 bekannt.

Bei den bekannten Vorrichtungen ist im praktischen Betrieb, insbesondere bei der Beschichtung oblong geformter Gegenstände nicht auszuschließen, daß diese Gegenstände, die häufig geradlinige Seitenflächen aufweisen, über eine längere Linie oder sogar über eine größere Fläche miteinander Kontakt haben. Bei der Umwälzbewegung des Gutes innerhalb der Trommel kann die flüssig aufgetragene Beschichtung bei einem derartig intensiven Kontakt zweier benachbarter Gegenstände zu deren Verklebung führen, insbesondere, da sich in der Praxis häufig innerhalb des umgewälzten Gutes eine "tote Zone" in der Mitte des Gutes ausbildet, innerhalb der die Gegenstände kaum bewegt werden.

Der Erfindung liegt die Aufgabe zugrunde, eine gattungsgemäße Vorrichtung dahingehend zu verbessern, daß diese eine möglichst vollständige Umwälzung des Gutes sicherstellt.

Diese der Erfindung zugrundeliegende Aufgabe wird durch eine Vorrichtung mit den Merkmalen des Anspruches 1 gelöst.

Die Erfindung schlägt mit anderen Worten vor, zusätzlich zu den an sich bekannten, üblicherweise innen am Trommelumfang anliegenden Mitnehmern, die das Gut entlang der Trommellängsachse in einer Richtung fördern, entgegengesetzt wirkende Mitnehmer vorzusehen, die nicht abwechselnd mit den ersten Mitnehmern angeordnet, sondern radial versetzt angeordnet sind, beispielsweise weiter zum Trommelinneren. Indem diese Mitnehmer auf Stegen gegenüber der Trommelwandung aufgeständert sind, kann das Gut unter diesen zweiten Mitnehmern entlang der Trommelwandung durch die ersten Mitnehmer gefördert werden. Die Bereiche des Gutbettes mit einer größeren Schichtdicke werden allerdings von den zweiten Mitnehmern erfaßt und da diese zweiten Mitnehmer entgegengesetzt zu den ersten Mitnehmern wirken, wird eine intensivere Durchmischung des Gutbettes bewirkt, so daß eine "tote Zone" minimiert und je nach Geometrie der Mitnehmer und der Trommel in einem praktischen Ausmaß regelrecht ausgeschlossen werden kann, nämlich dann, wenn die Beschichtungsergebnisse keine miteinander verklebten Gegenstände ergeben.

Vorteilhaft kann vorgesehen sein, die Trommel um ihre Längsachse kippbeweglich zu lagern, so daß sie in einer Schräganordnung betrieben werden kann. Auf diese Weise wird automatisch sichergestellt, daß die Gegenstände im Inneren der Trommel optimal durchgemischt und immer wieder von den Mitnehmern erfaßt und durcheinander bewegt werden.

Vorteilhaft können die ersten, aufwärtsfördernden Mitnehmer bei einem derartigen schrägstehenden Betrieb der Trommel entlang der Trommelwandung in an sich bekannter Weise angeordnet sein, während die zweiten, gegenläufig fördernden Mitnehmer gegenüber der Trommelwandung aufgeständert und dementsprechend radial weiter innen vorgesehen sind. Auf diese Weise kann die Trommel in an sich bekannter Weise preisgünstig ausgestaltet sein und mit geringem finanziellen Aufwand auf die zweiten Mitnehmer nachgerüstet werden.

Bei entsprechenden räumlichen Voraussetzungen kann die Vorrichtung vorteilhaft mehrere Trommeln aufweisen, die hintereinandergeschaltet arbeiten, so daß die einzelnen Beschichtungsschritte nacheinander in einer jeweils dafür spezialisierten Trommel ablaufen können. Auf diese Weise können in den einzelnen Trommel optimale Behandlungsbedingungen eingestellt werden; der Verschmutzungsgrad der einzelnen Trommeln kann dementsprechend gesenkt werden.

Vorteilhaft kann vorgesehen sein, die Trommel mit einer axialen Länge auszugestalten, die größer ist als es dem Durchmesser der Trommel entspricht, so daß insgesamt ein länglicher Zylinder geschaffen wird, wobei als Zylinder nicht nur Trommelformen mit rundem Querschnitt, sondern auch mit mehreckigem, beispielsweise achteckigem Querschnitt im Sinne dieser Erfindung bezeichnet werden. Durch diese längliche Ausgestaltung verteilt sich das Gut über eine größere Länge des Zylinders, so daß das umgewälzte Bett des Gutes eine kleinere "tote Zone" in seinem Inneren aufweist.

Ein Ausführungsbeispiel der Erfindung wird anhand der Zeichnungen im folgenden näher erläutert. Dabei zeigt
- Fig. 1: eine perspektivische Ansicht auf eine Vorrichtung mit geschlossener Abdeckhaube,
- Fig. 2: die Vorrichtung von Fig. 1 mit geöffneter Abdeckhaube und
- Fig. 3: einen Blick axial in das Innere der Trommel.

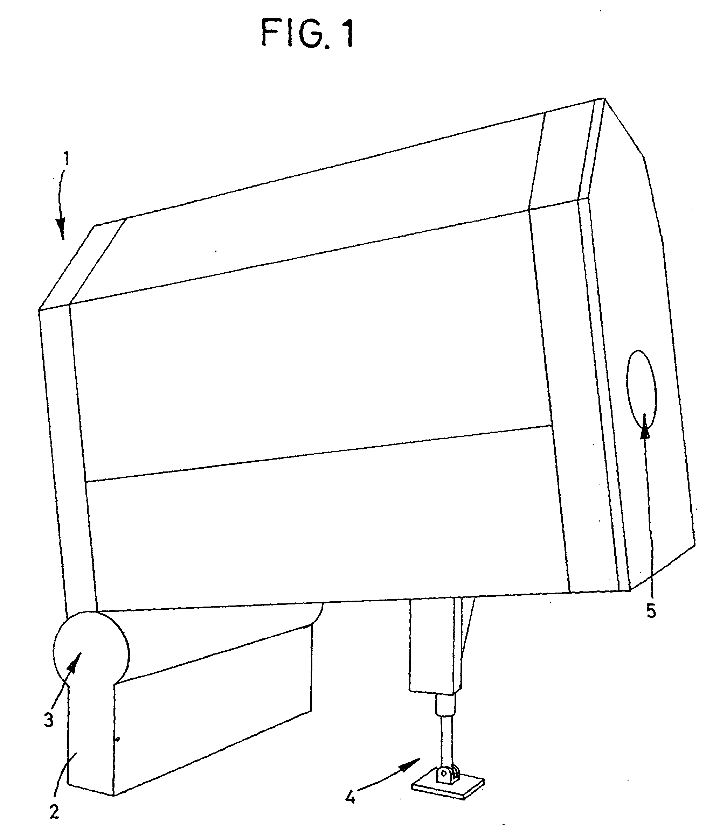

In Fig. 1 ist allgemein mit 1 eine Vorrichtung bezeichnet, die als "Trommelcoater" bezeichnet wird. Die Vorrichtung 1 weist einen Standfuß 2 auf, an dem sie um eine Kippachse 3 kippbeweglich angeordnet ist. Die Kippbewegung wird durch eine hydraulisch teleskopierbare Stütze 4 ermöglicht. Eine Einlaßöffnung 5 ist stirnseitig an der Vorrichtung 1 vorgesehen; sie dient auch als Auslaßöffnung.

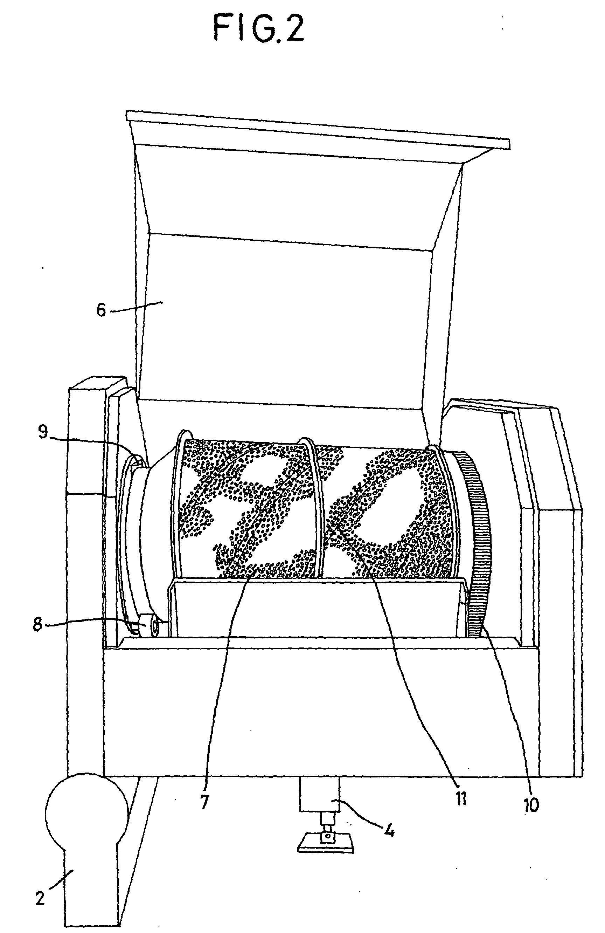

Aus Fig. 2 ist ersichtlich, daß die Vorrichtung eine aufschwenkbare Abdeckhaube 6 aufweist, unter der eine Trommel 7 vorgesehen ist. Mit ihrem einen Ende liegt die Trommel 7 auf Rollen 8 auf, wobei auch stirnseitig Anschlagrollen 9 vorgesehen sind. An ihrem anderen Ende weist die Trommel 7 einen Zahnkranz 10 auf, über den die Trommel rotatorisch antreibbar ist. Die Trommel 7 ist entlang ihrem zylindrischen Umfang aus einem durchlässigen Material, beispielsweise aus einem Lochblech gefertigt. Erste Mitnehmer 11 sind als ein- oder mehrgängige Wendel vorgesehen und unmittelbar an der Trommelwandung befestigt.

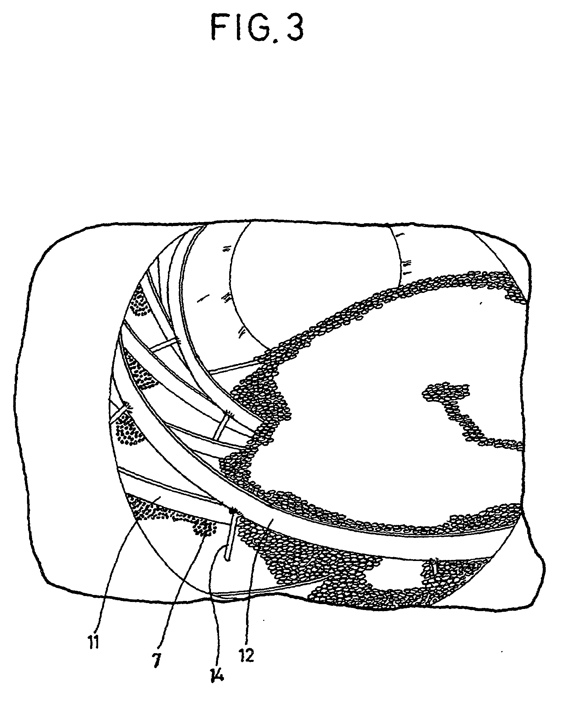

Aus Fig. 3 ist ersichtlich, daß zusätzlich zu den ersten Mitnehmern 11 zweite Mitnehmer 12 vorgesehen sind, die ebenfalls als Wendel ausgestaltet sind, deren Steigung jedoch entgegengesetzt zu der der Mitnehmer 11 verläuft. Die zweiten Mitnehmer 12 sind auf Stegen 14 im Abstand von der Trommelwandung befestigt und liegen daher radial innerhalb der ersten Mitnehmer 11.

## Patentansprüche

1. Vorrichtung zum Aufbringen einer Oberflächenschicht auf Kerne,
mit einer drehbar gelagerten Trommel zur Aufnahme der Kerne,
mit wenigstens einer Sprühdüse zum Auftrag des Oberflächenmaterials auf die Kerne,
sowie mit einer Heizeinrichtung für den Innenraum der Trommel,
sowie mit einer Einlaß- und einer Auslaßöffnung,
sowie mit in der Trommel angeordneten Mitnehmern für die Kerne,
**dadurch gekennzeichnet, daß** zweite Mitnehmer (12) für die Kerne vorgesehen sind, die die Kerne den ersten Mitnehmern (11) entgegengesetzt fördern und die radial gegenüber den ersten Mitnehmern (11) versetzt angeordnet sind.

2. Vorrichtung nach Anspruch 1, **dadurch gekennzeichnet. daß** die Trommel (7) kippbeweglich gelagert ist und in einer gegenüber der Horizontalen schrägstehenden Anordnung ihrer Längsachse antreibbar ist.

3. Vorrichtung nach Anspruch 2, **dadurch gekennzeichnet. daß** die ersten Mitnehmer (11) aufwärtsfördernd angeordnet sind und radial außerhalb von den zweiten Mitnehmern (12) angeordnet sind.

4. Vorrichtung nach einem der vorhergehenden Ansprüche, **dadurch gekennzeichnet, daß** zwei oder mehr Trommeln (7) axial hintereinander vorgesehen sind, wobei verschließbare Passagen zwischen je zwei benachbarten Trommeln (7) vorgesehen sind.

5. Vorrichtung nach einem der vorhergehenden Ansprüche, **dadurch gekennzeichnet, daß** die Trommel (7) als länglicher Zylinder ausgestaltet ist.

## Claims

1. An apparatus for depositing a surface coating on core objects,
comprising a rotatably mounted drum for receiving the core objects,
comprising at least one spray nozzle for depositing the surface material on the core objects,
and comprising a heater device for the interior space of the drum,
as well as an inlet and an outlet opening,
as well as pusher devices, which are disposed in the drum, for the core objects,
**characterised in that** second pusher devices (12), which convey the core objects counter to the conveying effected by the first pusher devices (11), are provided for the core objects, and are disposed radially offset in relation to the first pusher devices (11).

2. An apparatus according to claim 1, **characterised in that** the drum (7) is mounted so that it can execute tilting movements and can be driven with its longitudinal axis inclined to the horizontal.

3. An apparatus according to claim 2, **characterised in that** the first pusher devices (11) are disposed so that they convey the material upwards, and are disposed radially outwardly of the second pusher devices (12).

4. An apparatus according to any one of the preceding claims, **characterised in that** two or more drums (7) are provided axially in series, wherein passages which can be closed are provided between each two adjacent drums (7).

5. An apparatus according to any one of the preceding claims, **characterised in that** the drum (7) is fashioned as an elongated cylinder.

## Revendications

1. Dispositif destiné à l'application d'une couche de surface sur des noyaux, comportant
un tambour monté en rotation destiné à la réception des noyaux,
au moins une buse de pulvérisation pour l'application du matériau de surface sur les noyaux,
ainsi qu'un dispositif de chauffage pour l'espace intérieur du tambour,
ainsi qu'un orifice d'entrée et de sortie,
ainsi que des taquets d'entraînement pour les noyaux, qui sont disposés dans le tambour,
**caractérisé en ce que** des deuxièmes taquets d'entraînement (12) sont prévus pour les noyaux, qui transportent les noyaux dans le sens opposé aux premiers taquets d'entraînement (11), et qui sont disposés en étant décalés radialement par rapport aux premiers taquets d'entraînement (11).

2. Dispositif selon la revendication 1, **caractérisé en ce que** le tambour (7) est monté de façon à pouvoir basculer, et **en ce qu'**il peut être entraîné dans une position de son axe longitudinal inclinée par rapport à l'horizontale.

3. Dispositif selon la revendication 2, **caractérisé en ce que** les premiers taquets d'entraînement (11) sont disposés de façon à transporter vers le haut, et **en ce qu'**ils sont positionnés radialement à l'extérieur des deuxièmes taquets d'entraînement (12).

4. Dispositif selon l'une quelconque des revendications précédentes, **caractérisé en ce que** deux ou plusieurs tambours (7) sont prévus axialement les uns derrière les autres, des passages pouvant être fermés étant prévus entre deux tambours (7) voisins.

5. Dispositif selon l'une quelconque des revendications précédentes, **caractérisé en ce que** le tambour (7) est agencé sous la forme d'un cylindre oblong.
